# EUROPÄISCHE PATENTSCHRIFT

(11) **EP 3 200 082 B1**
(45) Veröffentlichungstag und Bekanntmachung des Hinweises auf die Patenterteilung: **07.06.2023**
(21) Anmeldenummer: 17152889.6
(22) Anmeldetag: 24.01.2017
(51) Int. Cl.: H04L 9/32

(54) **VERFAHREN ZUM AUTOMATISCHEN TESTEN EINES PROZESSABLAUFS**
METHOD FOR AUTOMATIC PROCESS EXECUTION TESTING
METHODE POUR AUTOMATISER LA VERFICATION D'EXECUTION DE PROCESSUS

(30) Priorität: 26.01.2016 DE 102016201066
(43) Veröffentlichungstag der Anmeldung: 02.08.2017
(73) Patentinhaber: Siemens Aktiengesellschaft, 80333 München (DE)
(72) Erfinder: Krautwurm, Florian, 81669 München (DE)
(74) Vertreter: Siemens Patent Attorneys

(56) Entgegenhaltungen:
- DE-A1-102011 012 444
- US-A- 4 309 569
- Nishant Neeraj: "Mastering Apache Cassandra Second Edition", , 1. März 2015 (2015-03-01), Seite 1; 8; 126, XP055353657, ISBN: 978-1-78439-261-1 Gefunden im Internet: URL:https://pdf.k0nsl.org/C/Computer%20and %20Internet%20Collection/2015%20Computer%2 0and%20Internet%20Collection%20part%207/Pa ckt%20Publishing%20Mastering%20Apache%20Ca ssandra%202nd%20%282015%29.pdf [gefunden am 2017-03-10]
- CHANG LIU ET AL: "MuR-DPA: Top-down Levelled Multi-replica Merkle Hash Tree Based Secure Public Auditing for Dynamic Big Data Storage on Cloud", INTERNATIONAL ASSOCIATION FOR CRYPTOLOGIC RESEARCH,, Bd. 20140530:122438, 29. Mai 2014 (2014-05-29), Seiten 1-12, XP061016179, [gefunden am 2014-05-29]
- Allaire Christian: "Using Hashbytes to track and store historical changes for SQL Server data", , 19 July 2012 (2012-07-19), XP055882707, Retrieved from the Internet: URL:https://www.mssqltips.com/sqlservertip /2543/using-hashbytes-to-track-and-store-h istorical-changes-for-sql-server-data/ [retrieved on 2022-01-24]

## Beschreibung

Die Erfindung betrifft ein Verfahren zum automatischen Testen eines Prozessablaufs, eine entsprechende Vorrichtung, ein Computerprogrammprodukt und eine Speichermedium.

Beim Testen z.B. von komplexen Anlagen, wie beispielsweise Kraftwerke, Montageanlagen, Industrieanlagen, Zügen bei denen Daten von einer Vielzahl von Sensoren anfallen die ausgewertet werden, medizinischen Geräten oder ähnlichem fallen eine Vielzahl von Daten an. Diese Daten werden im Rahmen eines Tests mit Referenzdaten verglichen. Ein vollständiger Vergleich großer Datenmengen, vor allem im sogenannten Big Data Bereich, wenn Datenmengen im Giga- oder Terabyte Bereich vorliegen, dauert sehr lange und kann effektiv nicht oder kaum Vollständig durchgeführt werden. Eine Reduktion von im Test anfallenden Daten ist andererseits oft nicht möglich, da dann das Verhalten des zu testenden Systems möglicherweise von einem Verhalten mit der "normalen Datenmenge" abweicht.

Für einen Vergleich werden verschiedene Methoden angewendet, die aber alle Nachteile mit sich bringen:
- Der einfachste Ansatz ist es, alle Daten vollständig zwischen Quelle und Ziel zu vergleichen. Da im Big Data Bereich aber Giga- und Terabytes an Daten verglichen werden müssen, ist der Ansatz aus Ressourcen- und Zeitgründen nicht für Akzeptanz- und Regressionstests praktikabel.
- Eine Alternative ist der Vergleich eines prozentualen Anteils der Daten. Diese Daten werden dann wie in Ansatz 1 zwischen Quelle und Ziel verglichen. Die Praxis hat aber gezeigt, dass es mitunter Fehler nur im einstelligen prozentualen Anteil der Daten gibt, die mit dieser Methode sehr wahrscheinlich übersehen werden.
- Ein dritter Ansatz verwendet sogenannte "Minus Queries", bei dem Daten aus Ziel- und Quell-Datenbanksystem mit Hilfe von SQL Queries subtrahiert werden. Diese Methode hat mehrere Nachteile. Sie kann nur in Datenbanksystemen angewandt werden, die auch "minus Queries" unterstützen. Nur bei Ungleichheit der Tabellen kommt Rückmeldung, auf Gleichheit erfolgt keine Reaktion. Die Query muss zweimal abgesetzt werden, einmal von Ziel auf Quelle und einmal von Quelle auf Ziel, um alle Unterschiede zu erfassen. "Mastering Apache Cassandra 2nd Edition" von Nishant Neeraj schlägt vor, über erste und zweite Daten jeweils einen MerkIe-Hash-Tree zu bestimmen und die obersten Hashwerte der Merkle-Hash-Trees miteinander zu vergleichen, um zu bestimmen, ob die ersten und zweiten Daten miteinander konsistent sind.

US 3 409 569 A ist eine Patentanmeldung des Namensgebers der Merkle-Hash-Trees, in welcher grundlegende Konzepte dargelegt werden

DE102011012444 offenbart ein Verfahren zum Synchronisieren von Datenbeständen mit Hilfe von Hash-Trees.

CHANG LIU ET AL: "MuR-DPA: Top-down Levelled Multi-replica Merkle Hash Tree Based Secure Public Auditing for Dynamic Big Data Storage on Cloud",INTERNATIONAL ASSOCIATION FOR CRYPTOLOGIC RESEARCH,, Bd. 20140530:122438 offenbart die Verwendung eines veränderten Merkle-Hash-Trees

Allaire Christian: "Using Hashbytes to track and store historical changes for SQL Server data" offenbart ETL und Hashing

Es ist Aufgabe der Erfindung eine Möglichkeit zu schaffen einen Test von Softwaresystemen, bei welchem große Datenmengen anfallen, effizient durchzuführen.

Diese Aufgabe wird durch die unabhängigen Ansprüche gelöst.

Vorteilhafte Weiterbildungen sind Gegenstand der abhängigen Ansprüche.

Die Erfindung betrifft ein Verfahren zum automatischen Testen eines Prozessablaufs, mit folgenden Schritten:
- Durchführen einer ersten Operation an Ausgangsdaten, woraus erste transformierte Daten hervorgehen;
- Einfügen eines zugehörigen ersten angepassten ETL Jobs nach der ersten Operation;
- Bestimmen eines ersten Merkle-Hash-Trees mit dem ersten ETL Job bezüglich der ersten transformierten Daten;
- Durchführen mindestens einer zweiten Operation an den ersten transformierten Daten, woraus zweite transformierte Daten hervorgehen;
- Einfügen mindestens eines zugehörigen zweiten angepassten ETL Jobs nach der mindestens einen zweiten Operation;
- Bestimmen mindestens eines zweiten Merkle-Hash-Trees mit dem zweiten ETL Job bezüglich der zweiten transformierten Daten;
- Vergleichen der Merkle-Hash-Trees miteinander;
- Bestimmen, dass die ersten transformierten Daten des ersten Merkle-Hash-Trees mit den zweiten transformierten Daten des mindestens einen zweiten Merkle-Hash-Trees identisch sind, falls ein oberster Hashwert des ersten Merkle-Hash-Trees mit einem obersten Hashwert des mindestens einen zweiten Merkle-Hash-Trees übereinstimmt.

Gemäß bevorzugten Ausführungsbeispielen stellen Referenzdaten insbesondere solche Daten dar, die auf ihre Richtigkeit geprüft wurden oder solche, die aus einem früheren Durchgang des Tests stammen.

Es erfolgt ein Vergleich der zumindest zwei Datenstrukturen anhand von Kontrollwerten, wobei für den Vergleich zumindest ein erster und ein zweiter Basis-Kontrollwert für die erste Datenstruktur gebildet wird und ein weiterer erster und ein weiterer zweiter Basis-Kontrollwert für die weitere Datenstruktur gebildet wird.

Es wird zumindest einmal jeweils für die erste Datenstruktur und die weitere Datenstruktur, insbesondere rekursiv, ein den Basis-Kontrollwerten übergeordneter Kontrollwert gebildet, jeweils zumindest aus dem ersten Kontrollwert und dem zweiten Kontrollwert. Es erfolgt ein Vergleich des zuletzt gebildeten Top-Kontrollwerts, insbesondere einem Einzelwert, der ersten Datenstruktur mit dem Top-Kontrollwert der weiteren Datenstruktur.

Die Erfindung betrifft ferner eine entsprechende Vorrichtung, Computerprogrammprodukt und Speichermedium.

Die Erfindung wird weiterhin anhand von Ausführungsbeispielen erläutert, die teilweise in den Figuren dargestellt sind. Es zeigen:
- Fig. 1: einen Merkle Tree;
- Fig. 2: einen Vergleich, bei dem die Top-Hashwerte von zwei Merkle Trees übereinstimmen;
- Fig. 3: einen Vergleich, bei dem die Top-Hashwerte von zwei Merkle Trees voneinander abweichen;
- Fig. 4: einen Screen-Shot einer Oberfläche, über die die Durchführung eines Tests koordiniert wird, bei dem im oberen Teil eingefügte Kontrolldatenberechnungen dargestellt sind und im unteren Teil eine Zuordnung eines Kontrollwertes zu einem Datum bzw. Wert, welcher von einem Sensor 1 zu einer bestimmten Zeit geliefert wird und
- Fig. 5: einen Merkle Tree im oberen Bereiche und darunter die Aufbereitung der Hash-Werte in Tabellenform.

Eine Überprüfung von Daten dauert im Big Data Bereich sehr lange und kann effektiv nicht oder kaum Vollständig durchgeführt werden. Ein Vergleich von Daten um die Vollständigkeit und Korrektheit nach Interaktion mit Soft- und Hardware zu überprüfen ist jedoch an vielen Stellen notwendig, beispielsweise bei einem
- Vergleich der Daten nach einem einfachen Kopiervorgang vom Quell- zum Zielsystem;
- Vergleich der Daten nach Änderung des Systems durch einen Regressionstest zwischen Ergebnis und gespeicherten, evaluierten Werten. Unter Regressionstest wird ein Test verstanden, der wiederholt durchgeführt wird, insbesondere nach dem Vornehmen von Änderungen am System. Diese Veränderungen der Daten können ebenfalls vorliegen nach map reduce Jobs bei denen auf einer Festplatte abgespeicherte Datenstrukturen geändert werden, nach ETL (extract transform load) Jobs bei denen relevanten Daten aus unterschiedlichen Quellendatenbanken in ein gemeinsames Format für eine Zieldatenbank gebracht und in diese geladen werden , nach Änderung der Systemsoftware oder/und der System Hardware;
- Konsistenzchecks nach Übertragung der Daten in ein Backup-System.

Zur Lösung des Problems werden in den nachfolgend beschriebenen Ausführungsbeispielen sogenannte Merkle Trees verwendet.

Bei Merkle Trees wird ein Hash-Wert für Daten berechnet, wobei die Daten beliebiger Art sein können, also beispielsweise Datenbits, Datenfiles, Tabelleneinträge etc. Unter einem Hash-Wert wird insbesondere ein Ausgabewert bestanden, der aus einer Abbildungsvorschrift hervorgeht, bei der verschiedene Eingabewerte mit hoher Wahrscheinlichkeit zu verschiedenen Ausgabewerten führen. Damit kann über den Ausgabe- oder Hashwert der Eingabewert identifiziert werden. Je nach Art der Hash-Funktion variiert diese Wahrscheinlichkeit.

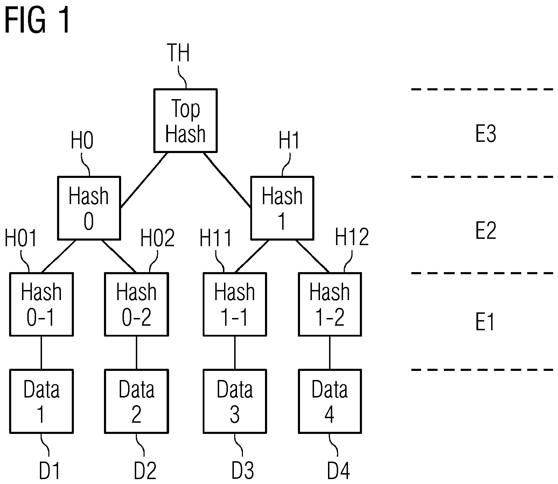

In Fig. 1 sind diese Daten als erste Daten D1, zweite Daten D2, dritte Daten D3 und vierte Daten D4 dargestellt. Zu jedem dieser Daten wird auf einer untersten Ebene E1 ein Basis- oder Grund-Hashwert gebildet. In dem gezeigten Beispiel werde auf der nächsten Ebene E2 je zwei dieser Hashwerte zu einem Hashwert H0 bzw. H1 zusammengefasst. In der obersten Ebene E3 wird ein Top Hashwert TH gebildet. Das Zusammenfassen geschieht insbesondere durch Summenbildung. Gemäß anderen Ausführungsbeispielen sind auch andere Hash-Funktionen hierfür vorgesehen.

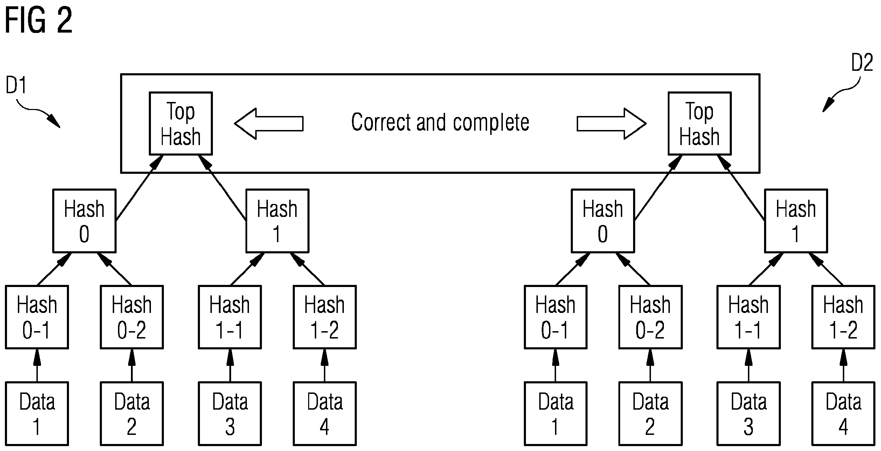

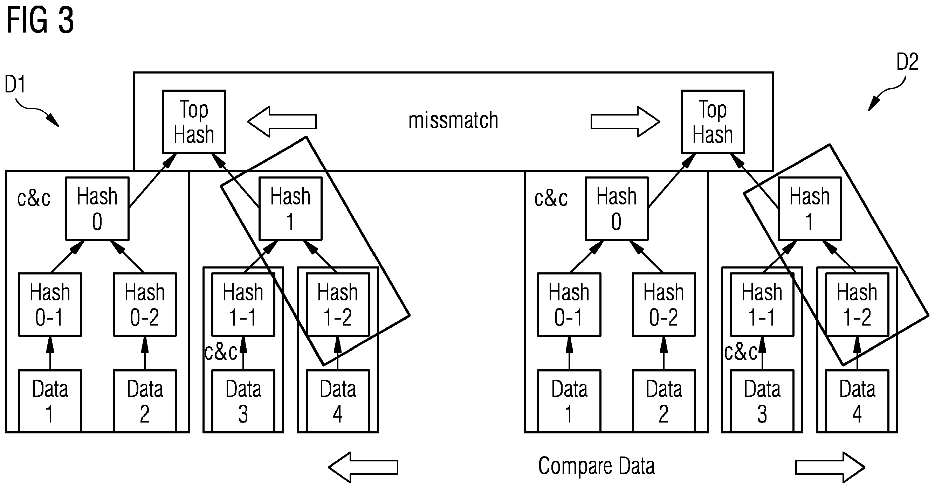

Die Grund-Hashwerte bilden also die unterste Ebene eines (auf dem Kopf stehenden) Datenbaumes. Über eine frei definierbare Anzahl dieser Grund- oder Basis-Hashes wird nun ein neuer Hash berechnet und so ein Baum aufgebaut. Stimmt der - dann einzige- Hash auf oberster Ebene zwischen Quell- und Zielsystem überein, sind alle Daten zu 100% identisch und damit auch komplett, siehe Fig. 2. Stimmt der Hash, wie in Fig. 3 nicht überein, kann nun im Baum abgestiegen werden, bis der zugrundeliegenden Fehler gefunden ist.

In Fig. 2 und Fig. 3 ist jeweils eine Datenstruktur in Form eines Merkle-Hash-Trees dargestellt, und zwar eine erste Datenstruktur D1 vor einer Operation an den zugrundeliegenden Daten D1-D4 und eine weitere Datenstruktur D2 nach einer Operation, d.h. also bei einer Veränderung der zugrundeliegenden Daten D1-D4. Vorzugsweise kann nach jeder Operation eine Datenstruktur gebildet werden. Dies ermöglicht ein effektives Auffinden von Fehlern im Programm.

Da für den Vergleich nur Hashes zwischen den verschiedenen Knoten ausgetauscht werden müssen, werden zusätzliche Ressourcen gewonnen, da das Versenden großer Datenmengen vermieden werden kann. Wird eine Inkonsistenz festgestellt, wird nur der entsprechende Ast des Baumes neu übertragen, um die Auslastung des Systems so gering wie möglich zu halten.

Dieses Vorgehen wird für den Test nun mit speziellen ETL Jobs kombiniert, die zu Testzwecken in den normalen Ablauf oder "Workflow" des Produktivsystems eingefügt werden. Damit lässt sich effizient Korrektheit und Vollständigkeit großer Datenmengen überprüfen.

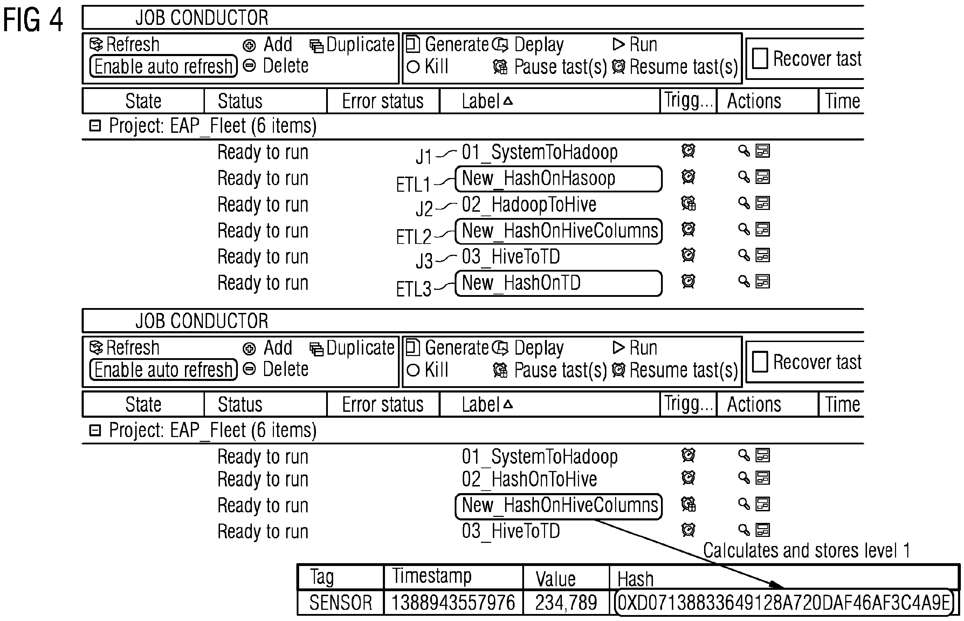

In dem in Fig. 4 gezeigten Beispiel eines Ablaufs eines Prozesses werden in einem ersten Ablaufschritt oder Job J1 Daten auf einem Datenspeicher gespeichert. Ein im Big Data Bereich dafür verwendetes Programm ist hierfür "Hadoop Distributed File System (HDFS)".

In einem zweiten Job J2 werden diese - weitgehend unstrukturierten Daten - in eine Datenstruktur überführt, z.B. eine für Datenbanken geeignete Struktur. Eine im Big Data Bereich verwendete Datenbank ist "Hive".

In einem dritten Job J3 werden diese Daten in ein weiteres Datenbankmanagementsystem überführt, beispielsweise "Teradata" .

In diesen normalen Ablauf des Prozesses mit erstem Job J1, zweitem Job J2 und drittem Job J3 werden nun die ETL-Jobs eingefügt, um Hash-Strukturen wie die beschriebenen Merkle Trees zu generieren, die dann effizient verglichen werden können.

In einem ersten ETL Job ETL1 wird eine Hash-Struktur oder Hash-Tree für die auf dem Datenspeicher, beispielsweise einer Festplatte, abgelegten Daten erzeugt.

Nach dem zweiten Job J2 wird ein zweiter ETL Job ETL2 eingefügt, der eine Hash-Struktur der in der ersten Datenbank abgelegten Daten erzeugt.

Nach dem dritten Job J3 wird ein dritter ETL Job ETL3 eingefügt, der eine Hash-Struktur der in der weiteren Datenbank abgelegten Daten erzeugt.

Beim Testen des Prozesses aus den ersten, zweiten, dritten Jobs J1, J2, J3 werden nun die in den ETL Jobs erzeugten Hashstrukturen verglichen. Damit kann effektiv festgestellt werden, in welchem Schritt ggf. ein Fehler geschehen ist.

Der Vergleich kann gegenüber dem Hash-Tree der auf der Festplatte abgelegten Daten erfolgen oder zu einem verifizierten Hash-Tree, der die ursprünglichen Daten widerspiegelt.

Die Anwendung ist also nicht nur für Regressionstests vorgesehen, bei denen ein Baum bereits vorgerechnet und gespeichert ist, sondern auch bei Tests, bei denen beide oder mehrere Bäume neu berechnet werden müssen.

Im gezeigten Beispiel wird durch die Einführung drei neuer ETL Jobs, im gezeigten Beispiel "Talend" Jobs, der normale Workflow im Test um drei Schritte erweitert, ohne die eigentlichen Daten zu verfälschen. Somit wird nur das Zeitverhalten im Gegensatz zum Produktivsystem beeinflusst.

Um auch den Zeitaufwand für Regressionstests so gering wie möglich zu halten, kann je ein Baum, für ein evaluiertes und ein gewünschtes Ergebnis, vorberechnet und dann gespeichert werden.

Für diesen Zweck bieten verschiedene Datenbanksysteme spezialisierte Tabellen an, z.B. Queue Tables in Teradata, die für geringe Datenmengen extra performant sind.

Der Hash auf dem Entry-Level kann zur einfacheren Traversierung des Baumes als zusätzliche Spalte in der eigentlichen Tabelle gehalten werden.

Speichert man alle anderen Hashes des Baumes ab dem zweiten Level in der schnelleren Tabelle, kombiniert mit der untersten Ebene als extra Eintrag in der Ziel-Tabelle, kann man eine effiziente Speicherung des Baumes implementieren.

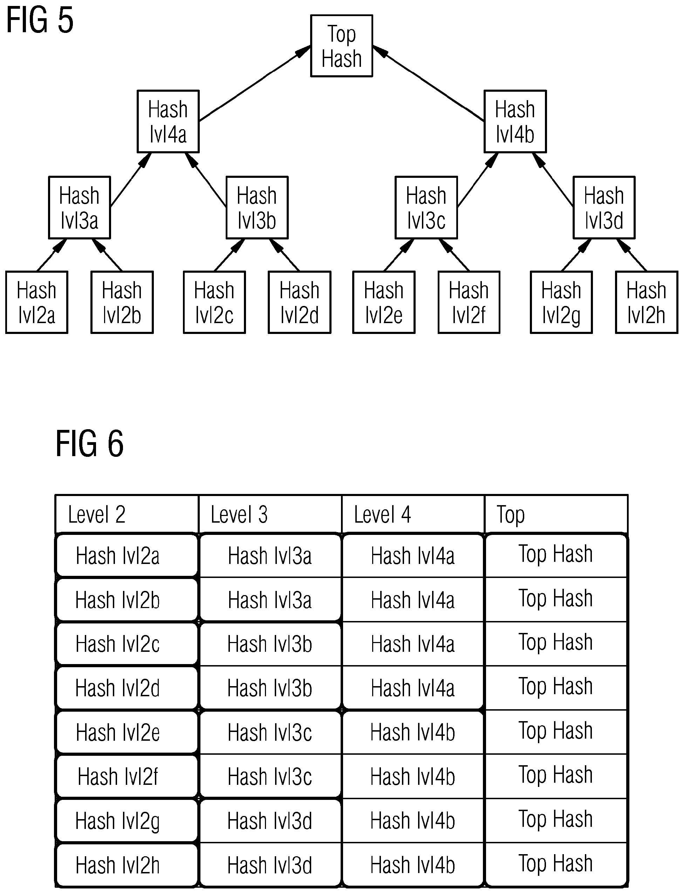

Die einfachste Implementierung ist hier eine Tabelle mit je einer Spalte pro Level wie in Fig. 5 am Beispiel eines Binärbaums mit 4 Hash-Leveln gezeigt. Die Reihen stellen somit den Abstiegsast bis zum zugrundeliegenden Knoten dar:
Da die verschiedenen Teilbäume unabhängig voneinander berechnet werden können, kann schon bei der Berechnung massiv parallelisiert werden, um weitere Performanz zu gewinnen.

Durch die geeignete Auswahl des Hash-Algorithmus, abhängig von den Anforderungen des eigentlichen Systems, kann die Geschwindigkeit noch weiter gesteigert werden.

Bei den beschriebenen Ausführungsbeispielen ergeben sich aus der Verwendung von Merkle Trees, nicht nur zur Konsistenzsicherung in Storagesystemen, sondern als Mittel, große Datenmengen im Big Data Kontext schnell und effizient auf Vollständigkeit und Korrektheit zu testen, insbesondere folgende Vorteile:
Es ist, wie eingangs beschrieben, aus Ressourcen- und Zeitgründen nicht möglich alle Daten pro Eintrag zu vergleichen, da es sich im Big Data Umfeld schnell um Terabytes mit mehreren Millionen Daten handelt.

Wenn auf eine nur teilweise Überprüfung zurückgegriffen wird, können viele Fehler nicht erkannt werden, da die Vergangenheit gezeigt hat, dass sich diese Fehler nur mit einem minimalen Prozentsatz der Gesamtdaten nachstellen lassen. Auch "Minus Queries" werden nicht von allen Systemen unterstützt und müssen jedes Mal gleich zweimal neuberechnet werden. Durch die Verwendung der vorhandenen Infrastruktur, wird auch keine neue Hardware-Instanz benötigt und auch der Datenverkehr zwischen den Instanzen wird gering gehalten, da nur Hashes übertragen werden.

Merkle Trees können vorberechnet und effizient gespeichert werden. Bei Verwendung von ETL Jobs kann dieser Vorgang auf dem Testsystem in den normalen Workflow des Produktivsystems eingebaut werden, ohne diesen funktional zu verfälschen. Da die Hashes des Baumes auf vielen Ebenen unabhängig voneinander sind, können sie massiv parallel berechnet werden, um weitere Performance zu gewinnen. Viele Datenbanksysteme bieten des Weiteren extrem schnelle Tables, die für geringe Datenmengen, z.B. die Keys der Bäume, sehr schnellen Zugriff ermöglichen. Der Vergleich von Merklebäumen ist im "Gut-Fall" auf den Vergleich des Tophashes beschränkt. Im "Schlecht-Fall" kann effizient im Baum abgestiegen werden, um die Inkonsistenz zu finden.

Somit ergibt sich die Möglichkeit effizient im Big Data Bereich zu testen, da viele Fehler sonst übersehen würden. Es können vollständige Datensätze aus dem tatsächlichen Betrieb verwendet werden, anstatt gekürzter Spieldaten oder Stichproben. Dieses Vorgehen wird durch die Ressourcen und Zeitersparnis im Test ermöglicht, findet mehr Fehler und spart dadurch letztendlich Geld und Zeit in allen Big Data Projekten.

Auch wenn die Erfindung in Zusammenhang mit spezifischen bevorzugten Ausführungsbeispielen, insbesondere in Bezug auf Tools wie Hadoop, Hive oder Teradata beschrieben wurde, ist es für den Fachmann entnehmbar, dass Kombinationen oder Modifikationen hiervon, sei es vollständig oder in einzelnen Aspekten für alle Ausführungsbeispiele möglich sind. Ebenso ist ein Datenvergleich - wie ausgeführt- nicht nur innerhalb eines Programmablaufs, sondern auch in Bezug auf andere Referenzdaten wie frühere Tests oder verifizierte Daten möglich.

## Patentansprüche

1. Verfahren zum automatischen Testen eines Prozessablaufs, mit folgenden Schritten:
- Durchführen einer ersten Operation (J1) an Ausgangsdaten (D1, D2, D3, D4), woraus erste transformierte Daten (D1, D2, D3, D4) hervorgehen;
- Einfügen eines zugehörigen ersten angepassten ETL Jobs nach der ersten Operation (J1);
- Bestimmen eines ersten Merkle-Hash-Trees (D1) mit dem ersten ETL Job bezüglich der ersten transformierten Daten (D1, D2, D3, D4) ;
- Durchführen mindestens einer zweiten Operation (J2) an den ersten transformierten Daten (D1, D2, D3, D4), woraus zweite transformierte Daten (D1, D2, D3, D4) hervorgehen;
- Einfügen mindestens eines zugehörigen zweiten angepassten ETL Jobs nach der mindestens einen zweiten Operation (J2);
- Bestimmen mindestens eines zweiten Merkle-Hash-Trees (D2) mit dem zweiten ETL Job bezüglich der zweiten transformierten Daten (D1, D2, D3, D4);
- Vergleichen der Merkle-Hash-Trees (D1, D2) miteinander;
- Bestimmen, dass die ersten transformierten Daten (D1, D2, D3, D4) des ersten Merkle-Hash-Trees (D1) mit den zweiten transformierten Daten des mindestens einen zweiten Merkle-Hash-Trees (D2) identisch sind, falls ein oberster Hashwert (TH) des ersten Merkle-Hash-Trees (D1) mit einem obersten Hashwert (TH) des mindestens einen zweiten Merkle-Hash-Trees (D2) übereinstimmt.

2. Verfahren nach einem der vorangehenden Ansprüche, wobei der zweite Merkle-Hash-Tree (D2) bezüglich der Ausgangsdaten (D1, D2, D3, D4) bestimmt ist.

3. Verfahren nach Anspruch 2, wobei die Operation einen Kopiervorgang von einem Quellsystem zu einem Zielsystem umfasst.

4. Verfahren nach einem der vorhergehenden Ansprüche, bei dem es sich bei den Ausgangsdaten (D1, D2, D3, D4) um Tabellenwerte, Dateien oder Bits handelt.

5. Verfahren nach einem der vorhergehenden Ansprüche, wobei die Hashwerte (H01, H02, H11, H12) eines Merkle-Hash-Trees (D1, D2) einen Datenbaum mit Ebenen (E1, E2, E3) bilden, in welchem ein Hashwert (H01, H02, H11, H12) einer untersten Ebene (E1) auf Daten (D1, D2, D3, D4) bestimmt ist und ein Hashwert (H01, H02, H11, H12) einer höheren Ebene (E2, E3) jeweils als Summe aus Hashwerten (H01, H02, H11, H12) einer unmittelbar untergeordneten Ebene (E1, E2) gebildet ist.

6. Vorrichtung mit einer Prozessoreinrichtung, welche zur Durchführung des Verfahrens zum automatischen Testen eines Prozessablaufs nach einem der Ansprüche 1 bis 5 eingerichtet ist, und mit einer Schnittstelle zu einer Speichereinrichtung zum Ablegen von Daten (D1, D2, D3, D4) oder/und transformierten Daten (D1, D2, D3, D4) oder/und Merkle-Hash-Trees (D1, D2) .

## Claims

1. Method for automatically testing a process flow, comprising the following steps:
- performing a first operation (J1) on starting data (D1, D2, D3, D4), resulting in first transformed data (D1, D2, D3, D4);
- inserting an associated first adapted ETL job after the first operation (J1);
- determining a first Merkle hash tree (D1) containing the first ETL job in relation to the first transformed data (D1, D2, D3, D4);
- performing at least one second operation (J2) on the first transformed data (D1, D2, D3, D4), resulting in second transformed data (D1, D2, D3, D4);
- inserting at least one associated second adapted ETL job after the at least one second operation (J2);
- determining at least one second Merkle hash tree (D2) containing the second ETL job in relation to the second transformed data (D1, D2, D3, D4);
- comparing the Merkle hash trees (D1, D2) with one another;
- determining that the first transformed data (D1, D2, D3, D4) of the first Merkle hash tree (D1) are identical to the second transformed data of the at least one second Merkle hash tree (D2) if a top hash value (TH) of the first Merkle hash tree (D1) matches a top hash value (TH) of the at least one second Merkle hash tree (D2).

2. Method according to the preceding claim, wherein the second Merkle hash tree (D2) is determined in relation to the starting data (D1, D2, D3, D4).

3. Method according to Claim 2, wherein the operation comprises a process of copying from a source system to a target system.

4. Method according to one of the preceding claims, in which the starting data (D1, D2, D3, D4) are table values, files or bits.

5. Method according to one of the preceding claims, wherein the hash values (H01, H02, H11, H12) of a Merkle hash tree (D1, D2) form a data tree comprising levels (E1, E2, E3), in which a hash value (H01, H02, H11, H12) of a bottom level (E1) is determined on data (D1, D2, D3, D4) and a hash value (H01, H02, H11, H12) of a higher level (E2, E3) is formed in each case as a sum of hash values (H01, H02, H11, H12) of a directly subordinate level (E1, E2).

6. Device comprising a processor apparatus that is configured to perform the method for automatically testing a process flow according to one of Claims 1 to 5, and comprising an interface to a storage apparatus for storing data (D1, D2, D3, D4) or/and transformed data (D1, D2, D3, D4) or/and Merkle hash trees (D1, D2).

## Revendications

1. Procédé permettant une vérification automatique d'un déroulement de procédure, comprenant les étapes consistant à :
- mettre en oeuvre une première opération (J1) sur des données de sortie (D1, D2, D3, D4), ce qui fournit des premières données transformées (D1, D2, D3, D4) ;
- insérer une première tâche ETL adaptée associée après la première opération (J1) ;
- déterminer un premier arbre de hachage de Merkle (D1) avec la première tâche ETL par rapport aux premières données transformées (D1, D2, D3, D4) ;
- mettre en oeuvre au moins une seconde opération (J2) sur les premières données transformées (D1, D2, D3, D4), ce qui fournit des secondes données transformées (D1, D2, D3, D4) ;
- insérer au moins une seconde tâche ETL adaptée associée après la au moins une seconde opération (J2) ;
- déterminer au moins un second arbre de hachage de Merkle (D2) avec la seconde tâche ETL par rapport aux secondes données transformées (D1, D2, D3, D4) ;
- comparer les arbres de hachage de Merkle (D1, D2) les uns avec les autres ;
- déterminer que les premières données transformées (D1, D2, D3, D4) du premier arbre de hachage de Merkle (D1) sont identiques aux secondes données transformées du au moins un second arbre de hachage de Merkle (D2) si une valeur de hachage (TH) la plus élevée du premier arbre de hachage de Merkle (D1) correspond à une valeur de hachage (TH) la plus élevée du au moins un second arbre de hachage de Merkle (D2).

2. Procédé selon l'une quelconque des revendications précédentes, dans lequel le second arbre de hachage de Merkle (D2) est déterminé par rapport aux données de sortie (D1, D2, D3, D4) .

3. Procédé selon la revendication 2, dans lequel l'opération comprend une action de copie depuis un système source vers un système cible.

4. Procédé selon l'une quelconque des revendications précédentes, dans lequel les données de sortie (D1, D2, D3, D4) sont des valeurs de table, des fichiers ou des bits.

5. Procédé selon l'une quelconque des revendications précédentes, dans lequel les valeurs de hachage (H01, H02, H11, H12) d'un arbre de hachage de Merkle (D1, D2) forment une arborescence de données présentant des niveaux (E1, E2, E3) et au sein de laquelle une valeur de hachage (H01, H02, H11, H12) d'un niveau (E1) le plus bas est déterminée sur des données (D1, D2, D3, D4) et une valeur de hachage (H01, H02, H11, H12) d'un niveau (E2, E3) le plus élevée est respectivement calculée comme étant la somme des valeurs de hachage (H01, H02, H11, H12) d'un niveau (E1, E2) immédiatement inférieur.

6. Dispositif comprenant un dispositif formant processeur conçu afin de mettre en oeuvre le procédé permettant une vérification automatique d'un déroulement de procédure selon l'une quelconque des revendications 1 à 5, et comprenant une interface vers un dispositif de mémoire permettant de stocker des données (D1, D2, D3, D4) et/ou des données transformées (D1, D2, D3, D4) et/ou des arbres de hachage de Merkle (D1, D2).
